# EUROPÄISCHE PATENTSCHRIFT

(11) **EP 1 702 663 B1**
(45) Veröffentlichungstag und Bekanntmachung des Hinweises auf die Patenterteilung: **21.01.2009**
(21) Anmeldenummer: 06110734.8
(22) Anmeldetag: 06.03.2006
(51) Int. Cl.: B01D 29/21

(54) **Verfahren zur Herstellung einer Endscheibe für ein Filtermedium**
Method for manufacturing an end cap for a filter media
Méthode de fabrication d'un disque terminal pour un média filtrant

(30) Priorität: 08.03.2005 DE 102005010437
(43) Veröffentlichungstag der Anmeldung: 20.09.2006
(73) Patentinhaber: Mann + Hummel GmbH, 71638 Ludwigsburg (DE)
(72) Erfinder: Kolczyk, Markus, 74395, Mundelsheim (DE); Harenbrock, Michael, 71640, Ludwigsburg (DE); Kraut, Ralph, 74376, Gemmrigheim (DE); Wagner, Udo, 84163, Marklkofen (DE); Schmid, Björn, 72666, Neckartailfingen (DE)

(56) Entgegenhaltungen:
- EP-A- 1 180 387
- EP-A- 1 520 611
- DE-A1- 4 441 608
- DE-A1- 10 235 902
- US-B1- 6 585 894

## Beschreibung

### Technisches Gebiet

Die Erfindung betrifft zwei Herstellungsverfahren für eine Endscheibe.

### Stand der Technik

Endscheiben für Filtermedien haben die Aufgabe, die fluiddurchlässigen Filtermedien auf den Stirnseiten dichtend zu verschließen. Zusätzlich schaffen die Endscheiben Anschlussöffnungen, welche eine Rohseite von einer Reinseite trennen. Durch diese Anschlussöffnungen müssen die Endscheiben mit einem Anschlusselement lösbar und dichtend verbindbar sein. Eine derartige Endscheibe ist beispielsweise aus der DE 198 13 319 bekannt. Dabei ist an einer thermoplastischen Endscheibe eines Filters an einer Stirnseite ein Kautschukring angespritzt. Dieser soll eine einfache Montage des Filters gewährleisten und eine betriebssichere Abdichtung erreichen. Nachteilig dabei ist, dass zur Aufnahme des Kautschukringes an der Endscheibe Aufnahmekonturen angeordnet worden sind, welche den Filter in axialer Länge überragen. Das eingespritzte Kautschukelement überragt wiederum die Aufnahmekonturen, wodurch ein erheblicher Einbauraum für die Endscheibe erforderlich ist.

Aus der US 6,585,894 ist ein Filtersystem bekannt, mit einer Endscheibe bei der ein thermoplastisches Material in ein Filtermedium eingebettet wird. Dieses thermoplastische Material wird wenigstens teilweise mit einem elastischen Material verbunden.

Es ist weiterhin aus der DE 44 41 608 eine Filteranordnung zu entnehmen, mit einem hohlzylindrischen, konzentrisch um eine Zylinderachse zickzack-förmig gefalteten Filterelement, wobei eine Dichtung als elastische Masse an dem Filterelement anordenbar ist und diese elastische Masse nach einem Aushärteprozess eine Restelastizität aufweist.

Aufgabe der Erfindung ist es, ein Verfahren zur Herstellung einer Endscheibe für ein Filterelement zu schaffen, welche eine zuverlässige Abdichtung und eine einfache Montage erlaubt. Weiterhin soll die Endscheibe einfach und wirtschaftlich vorteilhaft herstellbar sein.

Diese Aufgabe wird durch die Merkmale der unabhängigen Ansprüche gelöst.

### Offenbarung der Erfindung

Die Erfindung schafft auch ein Verfahren zur Herstellung einer thermoplastischen Endscheibe. Dazu wird ein thermoplastischer Rohling in eine Aufnahme eingelegt. Anschließend wird ein unvulkanisierter Kautschukring in den thermoplastischen Rohling eingelegt. Der Kautschukring wird durch Konturen, welche in der Aufnahme oder am Rohling vorhanden sind, zentriert. Anschließend werden Rohling und Kautschukring durch eine Wärmequelle erhitzt, wodurch die Oberfläche des Rohlings angeschmolzen und in einen plastischen Zustand versetzt wird. Gleichzeitig wird ein Vulkanisationsprozess des Kautschukringes aktiviert und dieser beginnt aufzuquellen. Jetzt wird ein Filtermedium in die plastische Oberfläche von Rohling und Kautschukring eingedrückt und fixiert. Dadurch verbinden sich der Rohling, der Kautschukring und das Filtermedium.. Nach dem Aushärten kann das entstandene Filterelement aus der Aufnahme entfernt werden.

In einem weiteren erfindungsgemäßen Verfahren wird eine Nitrilkautschuk-Endscheibe hergestellt. Dabei wird zuerst ein Vliesring in eine Form, welche zur Aufnahme aller notwendigen Komponenten gestaltet ist, eingelegt. Anschließend werden ein aus Nitrilkautschuk bestehender Rohling und ein unvulkanisierter Kautschukring in die Form eingelegt. Durch Einwirkung von thermischer Energie wird ein Vulkanisationsprozess des Rohlings und des Kautschukringes eingeleitet, wodurch diese aufquellen. Ein Filtermedium wird mittels einer Druckkraft in die aufgequollene, plastische Oberfläche eingedrückt. Der Prozess erlaubt es auch, zwei gegenüberliegende Endscheiben gleichzeitig mit einem Filtermedium zu vulkanisieren. Nach einer Aushärtezeit kann das entstandene Filterelement aus der Aufnahme entnommen werden.

Die nach dem Verfahren hergestellte Endscheibe eignet sich vorzugsweise zur Abdichtung von Filtermedien, die um eine Zylinderachse gefaltet sind. Als Filtermedien kommen dazu vorzugsweise Filterpapiere oder Vliesstoffe zum Einsatz. Die Endscheibe bildet wenigstens ein stirnseitiges Ende des Filtermediums und ist mit diesem fest und dichtend verbunden. Um eine dichte und leicht lösbare Verbindung zu einem Anschlusselement herzustellen, ist im Zentrum der Endscheibe eine zylindrische Öffnung angeordnet. Das Anschlusselement kann beispielsweise ein zylindrischer Stutzen oder ein Anschlusselement sein, welches die zylindrische Öffnung durchdringt. Um eine zuverlässige Dichtheit zu gewährleisten, ist an der radialen Innenseite der Endscheibe ein radialelastischer Kautschukring mit angeordnet. Dieser ist mit der Endscheibe beispielsweise durch Vulkanisation vernetzt oder durch mechanische Retention verkrallt bzw. durch Hinterschnitt verbunden. Der Kautschukring ist somit ein Teil der Endscheibe und schließt am stirnseitigen Ende des Filterelementes bündig ab oder ist von der Stirnseite in die axiale Innenseite des Filterelementes zurückgesetzt.

Die Endscheibe kann in vorteilhafter Weise aus Materialien mit unterschiedlicher Elastizität hergestellt werden. Zweckmäßigerweise wird ein mechanisch starres Material verwendet, das einen verwindungssteifen Träger bildet. Als zweites Material weist der Kautschukring die zur Abdichtung notwendige Elastizität auf. Die beiden Materialien können in radialer Richtung nebeneinander angeordnet sein und bilden eine im Wesentlichen plane Ebene. Dadurch kann die wirksame Filterfläche bei gleichem Einbauraum vergrößert oder der Einbauraum entsprechend reduziert werden.

Bei der ersten Ausgestaltung der Erfindung ist die Endscheibe aus einem Thermoplast gebildet. Der Kautschukring ist an der radialen Innenseite in die Endscheibe einvulkanisiert. Die thermoplastische Endscheibe kann vorzugsweise im Spritzgießverfahren hergestellt werden. Dadurch können an der Endscheibe zusätzliche Funktionskonturen wie beispielsweise Rippen, Stege, Nuten oder Aussparrungen angeordnet sein. Diese können beispielsweise zur Versteifung der Endscheibe oder zur Aufnahme von Führungselementen z. B. zur Zentrierung dienen.

Vorteilhaft ist es dadurch möglich, ohne wesentlichen wirtschaftlichen Mehraufwand in der Endscheibe weitere Funktionen zu integrieren. Gleichzeitig kann eine verwindungssteife Endscheibe bei minimalem Materialaufwand und Gewicht hergestellt werden.

An der Endscheibe können ringförmige Profilkonturen zur Aufnahme des Kautschukringes angeordnet sein. Der Kautschukring kann fertigungstechnisch mit der thermoplastischen Endscheibe durch mechanische Retention verbunden sein. Dies entspricht einer formschlüssigen Verbindung, die durch Verkrallung mit Hinterschnitt der Oberflächen entsteht.

Durch die Profilkonturen wird die Verbindungsfläche insgesamt vergrößert. Die Profilkonturen können beispielsweise durch Zacken, Rillen oder Nuten gebildet werden, welche vorzugsweise radial umlaufend angeformt sind. Durch die Profilkonturen wird die Festigkeit und Dichtheit des Kautschukringes gegenüber der Endscheibe vorteilhaft erhöht.

Bei der Zweiten Ausgestaltung der Erfindung besteht die Endscheibe aus einem Nitrilkautschuk. Der Nitrilkautschuk ist dabei im stirnseitigen Bereich in das Filtermedium einvulkanisiert. Nach der Aushärtung weist der Nitrilkautschuk eine ausreichende Steifigkeit auf. Dies erlaubt auch den Einsatz bei hohen Temperaturen von bis 170°C, wie sie beispielsweise im Motorenöl einer Brennkraftmaschine auftreten.

Eine weitere Optimierung kann dadurch erreicht werden, dass dem Nitrilkautschuk Phenolharz oder Epoxidharz beigemengt ist. Zur Abstimmung der Steifigkeit, der chemischen Beständigkeit und der optimalen Haftfähigkeit können auch Phenolharz und Epoxidharz beigemengt werden.

Die Beimengung von Epoxidharz zu Nitrilkautschuk bewirkt eine wesentlich bessere Verbindung gegenüber dem Kautschukring und dem Filtermedium. Weiterhin erhöht sich die Beständigkeit gegenüber Kraftstoffen, wie beispielsweise Diesel, insbesondere auch Raps-Methylester (RME) oder auch Benzin. Dabei sind Elastizität und Feinheit der Porenstruktur auch bei längerem Kontakt mit den genannten Kraftstoffen gewährleistet. Somit wird der Einsatz bei der Filtration von Kraftstoffen möglich.

In einer weiteren Kombination der verwendeten Materialien ist der Kautschukring aus Acrylat-Ethylen-Kautschuk (AEM) oder aus FluorKautschuk (FKM) gebildet. Diese Stoffe weisen eine erhöhte Beständigkeit gegenüber den zu filternden Fluiden auf. Alternativ steht noch Fluorsilicon-Kautschuk (FVMQ) zur Verfügung. Eine erhöhte Beständigkeit gegenüber Kraftstoffen wird insbesondere bei der Verwendung von FVMQ erreicht, wobei der Werkstoff FKM auch eine hohe Beständigkeit gegenüber Raps-Methylester aufweist.

Durch den radial mehrschichtigen Aufbau der Endscheibe kann die zur Abdichtung notwendige Elastizität vom radial innenliegenden Kautschukring erfüllt werden. Durch die Elastizität der Materialien können die Vorspannkräfte reduziert werden, wodurch sich die Montage- und Demontagekräfte minimieren lassen. Deshalb eignet sich das Filterelement in vorteilhafter Weise als Wechselelement zur Öl- und Kraftstofffiltration.

Diese und weitere Merkmale von bevorzugten Weiterbildungen der Erfindung gehen außer aus den Ansprüchen auch aus der Beschreibung und der Zeichnung hervor.

### Kurze Beschreibung der Zeichnungen

Ausführungsbeispiele der Erfindung werden anhand von schematischen Darstellungen beschrieben.

Hierbei zeigen

Figur 1 ein Filterelement mit thermoplastischen Endscheiben in perspektivischer Darstellung,

Figur 2 ein Filterelement gemäß Figur 1 im Vollschnitt, und

Figur 3 einen Ausschnitt aus einem Filterelement mit Nitrilkautschukendscheibe im Vollschnitt.

### Ausführungsform(en) der Erfindung

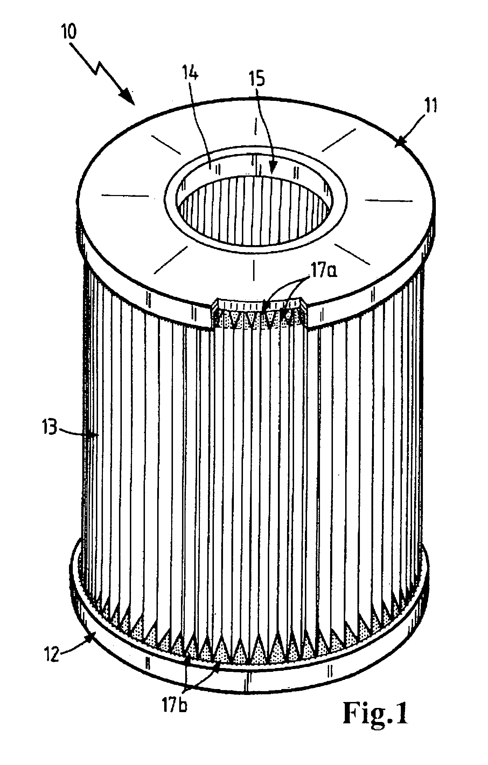

Figur 1 zeigt ein Filterelement 10, in welchem zwischen einer ersten Endscheibe 11 und einer zweiten Endscheibe 12 ein Filtermedium 13 angeordnet ist. Das Filtermedium 13 besteht aus zickzackförmig gefaltetem Papier und ist an seinen Stirnseiten an den Schmelzzonen17a, 17b in die Endscheiben 11, 12 eingeschmolzen. Die Schmelzzone 17a ist in einem Teilausschnitt schematisch dargestellt. Beide Endscheiben 11, 12 sind aus thermoplastischem Material gebildet. Im Zentrum der ersten Endscheibe 11 ist eine zylindrische Öffnung 15 sichtbar. Um an der radialen Innenseite der ersten Endscheibe 11 einen elastischen Bereich zu schaffen, ist ein Kautschukring 14 angeordnet. An der unteren Endscheibe 12 ist ein Steg 18 mit radialem Abstand zu Filtermedium 13 einstückig mit der unteren Endscheibe12 vorgesehen.

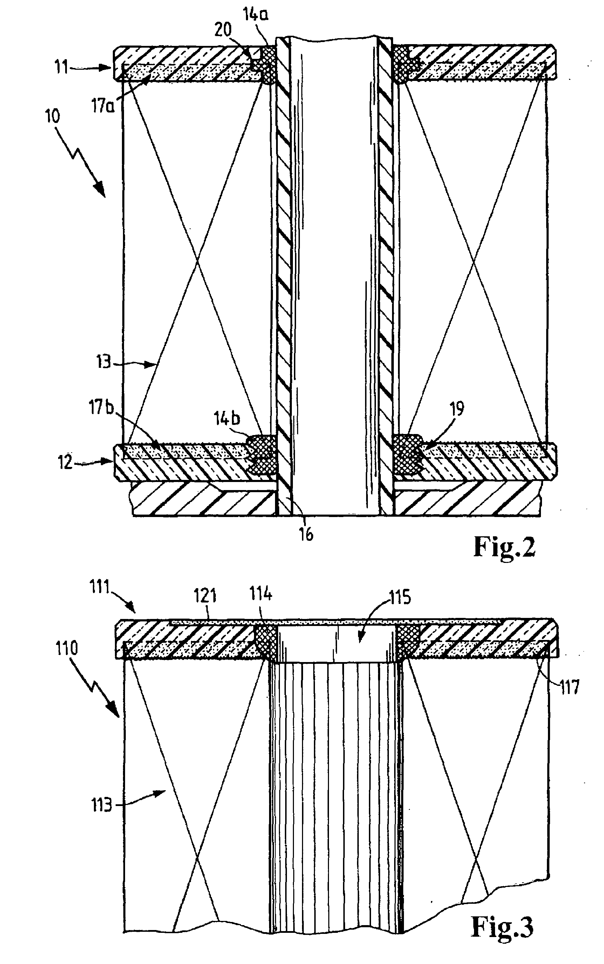

Figur 2 zeigt das Filterelement 10 gemäß Figur 1 im Vollschnitt. Der Figur 1 entsprechende Bauteile sind mit denselben Bezugszeichen versehen. Das Filtermedium 13 ist an den stirnseitigen Schmelzzonen 17a, 17b in die Endscheiben 11, 12 eingeschmolzen. Die Schmelzzone 17a umschließt einen ringförmigen Bereich der thermoplastischen Endscheibe 11 und einen am inneren, radialen Umfang angeordneten T-förmigen Kautschukring 14a. Der T-förmige Kautschukring 14 a ist in eine T-Kontur 20 der ersten Endscheibe 11 einvulkanisiert und stellt eine dichte und lösbare Verbindung zu einem Anschlusselement 16 her. An der unten angeordneten zweiten Endscheibe 12 ist ein gezackter Kautschukring 14b in eine Zackenkontur 19 der zweiten Endscheibe 12 einvulkanisiert. Durch die Verbindung zwischen der zweiten Endscheibe 12 und dem gezackten Kautschukring 14b entsteht eine größere Verbindungsfläche und eine bessere formschlüssige Verbindung der Materialien. Als zusätzliche Funktionskontur weist die untere Endscheibe 12 einen Steg 18 auf, welcher das Filtermedium 13 in einem radialen Abstand ringförmig umschließt. Bis zur Höhe des Steges 18 bildet sich ein Sammelraum 21 zum Auffangen von groben Schmutzpartikeln.

In Figur 3 ist ein Filterelement 110 ausschnittsweise dargestellt. Ein Filtermedium 113 ist an seiner oberen Stirnseite mit einer Nitrilkautschukendscheibe 111 dichtend verschlossen. Dazu ist das Filtermedium 113 in eine Schmelzzone 117 der Endscheibe 111 eingebettet. An der radialen Innenseite weist die Nitrilkautschukendscheibe 111 zu einer zylindrischen Öffnung 115 hin einen Kautschukring 114 auf. In der Nitrilkautschukendscheibe ist an der oberen Stirnseite ein Vliesring 121 eingebettet, welcher sich von der zylindrischen Öffnung 115 über einen Ringbereich des Kautschukringes 114 und der Endscheibe 111 erstreckt. Der Vliesring 121 hat die Eigenschaft, die radiale Elastizität der Endscheibe nicht zu beeinflussen und ein Einreißen des elastischen Materials wirksam zu verhindern.

Figur 4 zeigt ein Filterelement 110 gemäß Figur 3 in perspektivischer Darstellung. Bauteile, die der Figur 3 entsprechen, sind mit den gleichen Bezugszeichen versehen. Das Filtermedium 113 wird stirnseitig von einer oberen Nitrilkautschukendscheibe 111 und einer unteren NitrilkautschukEndscheibe 112 dichtend abgeschlossen. Der Vliesring 121 schließt radial bündig mit dem Kautschukring 114 gegenüber der zylindrischen Öffnung 115 ab.

## Patentansprüche

1. Verfahren zur Herstellung einer Endscheibe für ein ringförmig um eine Zylinderachse gefaltetes Filtermedium, wobei diese über einen Bereich in eine Stirnseite des Filtermediums einplastifiziert ist und an ihrer radialen Innenseite einen Kautschukring aufweist, und der anvulkanisierte Kautschukring bündig zu der äußeren Stirnseite oder unter der äußeren Stirnseite der Endscheibe angeordnet ist und eine dichte und lösbare Verbindung zu einem im Zentrum angeordneten Anschlusselement herstellt, wobei diese Endscheibe aus einem Thermoplast besteht, **gekennzeichnet durch** folgende Schritte:
- Einlegen eines thermoplastischen Rohlings in eine Aufnahme,
- Einlegen eines Kautschukringes in den thermoplastischen Rohling,
- Gleichzeitiges Anschmelzen des Rohlings und Aktivierung der Vulkanisation,
- Einbetten eines Filtermediums in die plastische Masse,
- Aushärten der Schmelze.

2. Verfahren zur Herstellung einer Endscheibe für ein ringförmig um eine Zylinderachse gefaltetes Filtermedium, wobei diese über einen Bereich in eine Stirnseite des Filtermediums einplastifiziert ist und an ihrer radialen Innenseite einen Kautschukring aufweist, und der anvulkanisierte Kautschukring bündig zu der äußeren Stirnseite oder unter der äußeren Stirnseite der Endscheibe angeordnet ist und eine dichte und lösbare Verbindung zu einem im Zentrum angeordneten Anschlusselement herstellt und wobei diese Endscheibe aus einem Nitrilkautschuk hergestellt ist, **gekennzeichnet durch** folgende Schritte:-Einbringen eines Vliesringes in eine Aufnahme, - Einbringen eines Kautschukringes und eines Rohlings aus Nitrilkautschuk in die Aufnahme,-Einbringen eines Filtermediums auf den in der Aufnahme liegenden Rohling und den Kautschukring,
- Aktivierung der Vulkanisation **durch** Zuführung thermischer Energie,
- Aushärten der elastischen Masse.

## Claims

1. Process for manufacturing an end plate for a filter medium pleated in the shape of a ring around a cylinder axis, the cylinder axis being fixed to the front end of the filter medium over a section by plasticization and featuring at its radial inner side a rubber ring, the scorched rubber ring being flush with the outer front end or under the outer front end of the end plate and ensuring a tight and detachable connection to a connection element located in the center, this end plate consisting of thermoplastic, **characterized by** the following steps:
- Introduction of a thermoplastic blank into a fixing,
- Introduction of a rubber ring into the thermoplastic blank,
- Simultaneous fixing of the blank by melting and activation of the vulcanization,
- Embedding a filter medium into the plastic mass,
- Hardening of the molten mass.

2. Process for manufacturing an end plate for a filter medium pleated in the shape of a ring around a cylinder axis, the cylinder axis being fixed to the front end of the filter medium over a section by plasticization and featuring at its radial inner side a rubber ring, the scorched rubber ring being flush with the outer front end or under the outer front end of the end plate and ensuring a tight and detachable connection to a connection element located in the center, and this end plate consisting of nitrile rubber, **characterized by** the following steps:
- Introduction of a fleece ring into a fixing,
- Introduction of a rubber ring and a blank made of nitrile rubber into the fixing,
- Placing a filter medium onto the blank located in the fixing and the rubber ring,
- Activation of the vulcanization by adding thermal energy,
- Hardening of the elastic mass.

## Revendications

1. Procédé de fabrication d'une plaque d'extrémité pour un milieu filtrant plié de façon annulaire autour d'un axe de cylindre, celle-ci étant plastifiée sur une zone dans une face frontale du milieu filtrant et présente sur sa face intérieure radiale une bague en caoutchouc, et la bague en caoutchouc vulcanisée étant placée en affleurement avec la face frontale extérieure ou sous la face frontale extérieure de la plaque d'extrémité et établissant une liaison étanche et amovible avec un élément de raccordement placé au centre, et cette plaque d'extrémité étant composée d'un matériau thermoplastique, **caractérisé par** les étapes suivantes :
- insertion d'une ébauche thermoplastique dans un logement,
- insertion d'une bague en caoutchouc dans l'ébauche thermoplastique,
- simultanément, fusion de l'ébauche et activation de la vulcanisation,
- intégration d'un milieu filtrant dans la masse plastique,
- durcissement de la matière fondue.

2. Procédé de fabrication d'une plaque d'extrémité pour un milieu filtrant plié de façon annulaire autour d'un axe de cylindre, celle-ci étant plastifiée sur une zone dans une face frontale du milieu filtrant et présente sur sa face intérieure radiale une bague en caoutchouc, et la bague en caoutchouc vulcanisée étant placée en affleurement avec la face frontale extérieure ou sous la face frontale extérieure de la plaque d'extrémité et établissant une liaison étanche et amovible avec un élément de raccordement placé au centre, et cette plaque d'extrémité étant composée d'un caoutchouc nitrile, **caractérisé par** les étapes suivantes :
- insertion d'une bague en non-tissé dans un logement,
- insertion d'une bague en caoutchouc et d'une ébauche en caoutchouc nitrile dans le logement,
- insertion d'un milieu filtrant sur l'ébauche située dans le logement et sur la bague en caoutchouc,
- activation de la vulcanisation par apport d'énergie thermique,
- durcissement de la masse élastique.
